# EUROPÄISCHE PATENTSCHRIFT

(11) **EP 3 671 143 B1**
(45) Veröffentlichungstag und Bekanntmachung des Hinweises auf die Patenterteilung: **16.07.2025**
(21) Anmeldenummer: 19218826.6
(22) Anmeldetag: 20.12.2019
(51) Int. Cl.: G01G 7/02, G01G 23/00

(54) **WAAGE MIT ÜBERLASTDIAGNOSE**
SCALES WITH OVERLOAD DIAGNOSIS
BALANCE À DIAGNOSTIC DE SURCHARGE

(30) Priorität: 21.12.2018 DE 102018133563
(43) Veröffentlichungstag der Anmeldung: 24.06.2020
(73) Patentinhaber: WIPOTEC GmbH, 67657 Kaiserslautern (DE)
(72) Erfinder: Gottfriedsen, Jan, 67714 Waldfischbach-Burgalben (DE); Schulzki, Alexander, 67705 Stelzenberg (DE)
(74) Vertreter: Eder Schieschke & Partner mbB

(56) Entgegenhaltungen:
- JP-A- 2005 017 161
- US-A- 3 789 937
- US-A- 4 149 605
- US-A- 4 930 588

## Beschreibung

Die vorliegende Erfindung betrifft eine nach dem Prinzip der elektromagnetischen Kraftkompensation arbeitende Waage. Bei solchen an sich bekannten Waagen wird eine Gewichtskraft häufig in ein Kraft übersetzendes Hebelwerk eingeleitet, wobei an einem der Hebel eine Tragspule angeordnet ist, die in das Magnetfeld eines bevorzugt ortsfesten Magneten eintaucht und dabei eine vorgegebene Sollposition relativ zum Magneten einnimmt. Auch "direkt tragende" Systeme, also solche ohne Hebelwerk, arbeiten nach dem gleichen Prinzip.

Um den Hebel bzw. die Spule auch bei unterschiedlichen Gewichtskräften stets in der Soll-Lage zu halten, wird mit der Spule eine entsprechend geregelte Gegenkraft erzeugt, indem die Spule von einem Spulenstrom durchflossen wird, der eine im Magnetfeld des Magneten wirkende Lorentzkraft erzeugt. Der Strom wird von einer im Weiteren als "Endstufe" bezeichneten elektronischen Einheit bereitgestellt, wobei diese zu einer unipolaren oder bipolaren Versorgung der Spule ausgebildet sein kann. Die Stärke des geregelten Spulenstroms ist ein Maß dafür, wie stark die mit der Spule erzeugte Gegenkraft ist, was wiederum ein Maß für die in das Hebelwerk eingebrachte Gewichtskraft oder Last ist.

Zur Auswertung des Spulenstroms wird ein Messwiderstand in Serie zur Spule geschaltet und die am Messwiderstand abfallende Spannung, ggf. vorverarbeitet durch Verstärker und/oder Filter (V) oder andere elektronische Bauteile, einem A/D-Wandler zugeführt. Dieser wandelt die eingehende Spannung in digitale Signale um, die einer Steuereinheit zur Auswertung zugeführt werden, um bspw. den Gewichtswert anzuzeigen oder gewichtswertabhängige Steuerungsvorgänge auszulösen.

Ein solchermaßen verwendeter A/D-Wandler arbeitet innerhalb eines vorgebbaren Messbereichs. Liegt die eingebrachte Last bzw. die dadurch am Messwiderstand abfallende Spannung außerhalb (unter oder oberhalb) dieses Messbereichs, so liegt ein Unterlast- und/oder Überlastfall vor (im Sinne dieser Anmeldung steht der Begriff "Überlast" stellvertretend für den Unterlastfall (Zug) und den Überlastfall (Druck). Im Stand der Technik wird der Überlastfall lediglich dadurch festgestellt, dass die vom A/D-Wandler erfasste Spannung außerhalb seines für die Messung vorgesehenen Messbereichs liegt. Über die Höhe der Überlast kann keine Aussage getroffen werden. Dauer, Höhe, Anzahl, Art und Zeitpunkt der Überlast haben jedoch Einfluss auf den Wägebetrieb und die Wägegenauigkeit, da die Waage nach einem Überlastfall möglicherweise eine gewisse Erholungszeit benötigt oder gar eine Nullpunktfestlegung oder eine Neujustierung erforderlich wird. Das Dokument US4930588 A offenbart eine Waage, die nach dem Prinzip der elektromagnetischen Kraftkompensation arbeitet gemäß dem Stand der Technik.

Aufgabe der Erfindung war es daher, eine Waage mit Überlasterkennung bzw. Überlastdiagnose anzubieten, die ein Auswerten der Überlastfälle und eine davon abhängige Steuerung der Waage ermöglicht, sowie eine Überprüfung der Funktionsfähigkeit der Überlastsicherung sowie die Bewertung der Auslöseschwelle erlaubt.

Die Aufgabe wird gelöst durch eine Waage nach Anspruch 1 und ein Verfahren nach Anspruch 9.

Die Erfindung geht von der Erkenntnis aus, dass ein Überlastfall genauer analysiert werden kann mit Hilfe einer Hilfsmessspannung U_{H}, die zusätzlich zu der am Messwiderstand R abfallenden Spannung U_{R} erfasst wird. Bei der Hilfsmessspannung handelt es sich erfindungsgemäß um diejenige Spannung, die entweder
a) zwischen dem Ausgang der Endstufe und der Spule oder
b) zwischen der Spule und dem Messwiderstand anliegt.

In Variante a) kann die Hilfsmessspannung vorzugsweise direkt am Ausgang der Endstufe abgegriffen werden. Alternativ könnte zwischen dem Ausgang der Endstufe und der Spule, etwa zum Zwecke des Explosionsschutzes, noch ein Schutzwiderstand vorgesehen sein. Der Abgriff des Hilfsmessspannung ist dann auch zwischen dem Schutzwiderstand und der Spule möglich. Variante b) könnte konstruktiv oder schaltungstechnisch etwas einfacher sein, wobei hier die Hilfsmessspannung nahe an der Messwiderstandsspannung liegen könnte.

Im Fall einer Überlast liegt die Hilfsmessspannung (U_{H}) außerhalb des Bereichs bzw. derjenigen Spannung (U_{R}) des Messwiderstands, die innerhalb des für die Messwiderstandsspannung (U_{R}) eingestellten Messbereichs des zugehörigen A/D-Wandlers korrekt erfasste werden könnte. Durch separate Auswertung der erfindungsgemäßen Hilfsmessspannung kann die Überlast jedoch quantitativ und/oder qualitativ erfasst werden. Der Messbereich zur Erfassung der Hilfsmessspannung entspricht bevorzugt im Wesentlichen der maximalen Ausgangsspannung der Endstufe.

Die Hilfsmessspannung wird dazu ebenfalls einem A/D-Wandler zugeführt. Dabei kann es sich durch Umschaltung der Eingangsspannung um denselben A/D-Wandler (AD₁) handeln, mit dem auch die Messwiderstandsspannung (U_{R}) erfasst wird. Um die dann höhere (oder niedrigere) Spannung erfassen zu können, kann ein anderer, dafür geeigneter Messbereich am A/D-Wandler eingestellt werden (auch zwei "übereinander" angeordnete Messbereiche für die Messwiderstandsspannung (U_{R}) und die Hilfsmessspannung (U_{H}) gelten hier als "anderer" Messbereich). Alternativ kann die Hilfsmessspannung, die ebenso wie die Messwiderstandsspannung vor Einleitung in den A/D-Wandler vorzugsweise mit einem Verstärker V verstärkt wird, eine geringere Verstärkung erfahren als die Messwiderstandsspannung, so dass der A/D-Wandler unverändert betrieben wird, die Hilfsmessspannung aber "verkleinert" zugeführt wird und daher auswertbar ist.

In einer erfindungsgemäßen Ausführungsform wird die Hilfsmessspannung daher dem gleichen A/D-Wandler zugeführt, der im regulären Betrieb die Spannung (U_{R}) des Messwiderstandes erfasst. Dazu wird der Eingang des A/D-Wandlers von der Messwiderstandsspannung (U_{R}) auf die Hilfsmessspannung (U_{H}) umgeschaltet, sobald die Messwiderstandsspannung (U_{R}) außerhalb des vorgesehenen Messbereichs liegt bzw. in die Nähe der Obergrenze kommt, also eine vorgegebene Schwelle überschreitet. Die Umschaltung kann durch den A/D-Wandler selbst initiiert und/oder vorgenommen werden. Der Umschalter kann extern ausgeführt oder integraler Bestandteil des A/D-Wandlers sein. Im letzteren Fall (integriert) kann der A/D-Wandler zwei Eingangsanschlüsse besitzen. Im ersten Fall (extern) kann der A/D-Wandler einen Steuerausgang zur Ansteuerung des Umschalters besitzen.

Mit dem Umschalten der an den Eingang des A/D-Wandlers anliegenden Signalquelle wird entweder auch der Messbereich des Wandlers umgeschaltet (zum Beispiel kann die Empfindlichkeit des Wandlers halbiert und so der Messbereich verdoppelt werden), oder die Verstärkung der Hilfsmessspannung wird geeignet reduziert, ohne dass der Messbereich des A/D-Wandlers geändert werden müsste.

In einer alternativen Ausführungsform der Waage wird die Messwiderstandsspannung (U_{R}) einem ersten A/D-Wandler AD₁ zugeführt, während für die Hilfsmessspannung (U_{H}) ein separat zum ersten A/D-Wandler AD₁ ausgebildeter zweiter A/D-Wandler AD₂ vorgesehen ist. Hier kann der Messbereich des zweiten A/D-Wandlers von vornherein ausreichend groß gewählt werden, um die eingehende Hilfsmessspannung erfassen und auswerten zu können. Alternativ könnte die Verstärkung der Hilfsmessspannung (U_{H}) so gewählt werden, dass die beiden A/D-Wandler mit dem gleichen Messbereich betrieben werden können.

Bei der elektromagnetischen Kraftkompensation ist die "Traglast" definiert durch den maximalen Kompensationsstrom, den die Endstufe liefern kann, um die Spule in der Soll-Position zu halten. Für eine darüber hinausgehende Belastung kann die Endstufe keinen ausreichenden Spulenstrom mehr bereitstellen, so dass die Spule und ein sie ggf. tragendes Hebelwerk ausgelenkt werden und die Sollposition verlassen.

Um die Überlast einer Waage zu vermeiden, sind mechanische Überlastsicherungen bekannt, die das Hebelwerk schützen und (möglicherweise irreversible) Verformungen des Hebelwerks oder anderer Waagenkomponenten mechanisch verhindern sollen. Eine Überlast in wägetechnischer Sicht wird aber definitionsgemäß bereits dann angenommen, wenn die Messwiderstandsspannung (U_{R}) außerhalb des Messbereichs des zugehörigen A/D-Wandlers liegt. Eine mechanische Überlast, welche die Mechanik der Waage gefährdet, muss dann noch nicht vorliegen. Aufgrund des überschrittenen Messbereichs des A/D-Wandlers kann die an der Spule erzeugte Kraft aber aus der Messwiderstandsspannung (U_{R}) nicht mehr quantitativ bestimmt werden.

Mechanische Überlastsicherungen sind so ausgelegt, dass sie bevorzugt eingreifen, noch bevor (in manchen Fällen aber auch erst nachdem) bleibende Schäden auftreten. Im bevorzugten Fall ist die Traglast bzw. die maximale Ausgangsspannung der Endstufe noch nicht erreicht, die Spule bzw. ihr Hebel verlassen die Sollposition noch nicht, da die Endstufe ausreichenden Kompensationsstrom für die Spule liefern kann. In diesem Fall liegt zwar die Widerstandsspannung (U_{R}) außerhalb des im zugehörigen A/D-Wandler vorgesehenen Messbereichs, die abgegriffene Hilfsmessspannung (U_{H}) lässt sich jedoch in einem A/D-Wandler mit größerem Messbereich oder durch verringerte Verstärkung quantitativ auswerten, um so die Überlast wie folgt analysieren zu können:
Im regulär vorgesehenen Betrieb der Waage verursacht die in die Waage eingebrachte Druck- oder Zuglast in vorgenannter Weise eine Widerstandsmessspannung (U_{R}) innerhalb des Messbereichs des zugehörigen A/D-Wandlers. Nimmt die Gewichtskraft weiter zu, so steigt die Widerstandsmessspannung entsprechend an. Verlässt sie den vorgesehenen Messbereich des A/D-Wandlers, so ist die Bestimmung des Spulenstroms nicht mehr möglich. Mit der Zunahme/Abnahme der auf die Waagenplattform (Lasteinleitung) einwirkenden Kraft (Last) steigt aber auch die abgegriffene Hilfsmessspannung.

Diese steigt beispielsweise bei zunehmender Lastkraft so lange weiter an, bis die maximale Ausgangsspannung der Endstufe erreicht ist und/oder eine mechanische Überlastsicherung eingreift. Greift die Überlastsicherung ein, bevor die maximale Ausgangsspannung der Endstufe erreicht ist, so hat der Spulenstrom ein Maximum erreicht und die Hilfsmessspannung steigt nicht mehr weiter an, sondern bleibt im Wesentlichen konstant. Ihr Verlauf und ihr Maximalwert erlauben dann Rückschlüsse auf die Auslösekraft und auf die Funktionsfähigkeit der Überlastsicherung.

Aus dem Verlauf und/oder der Höhe der Hilfsmessspannung können Erkenntnisse über die Überlastsicherung gewonnen werden, wobei das bloße Überschreiten von vorgebbaren, auch gezielt veränderbaren Grenzwerten bereits qualitativ das Auslösen der Überlastsicherung anzeigen kann. Die quantitative Auswertung der Hilfsmessspannung gestattet, sofern die maximale Ausgangsspannung der Endstufe noch nicht erreicht wurde, auch die Zuordnung eines bestimmten Lastwertes (bspw. Kraft in Newton, Gewicht in g, kg etc.), welcher die Auslösung der Überlastsicherung verursacht hat.

Vorzugsweise ist für die Waage eine Steuereinheit vorgesehen zur Auswertung der Messwiderstandsspannung (U_{R}) und der Hilfsmessspannung (U_{H}) bzw. ihrer von dem oder den zugehörigen A/D-Wandlern bereitgestellten digitalen Werte. Die Steuerung kann unter anderem dazu ausgebildet sein, Überlastfälle zu detektieren, Grenzwerte für Überlastfälle fest oder variabel (Nachführung) zu definieren bzw. abzuspeichern, Warnmeldungen bspw. optisch oder akustisch auszugeben, Wiegefunktionen vorübergehend oder dauerhaft zu unterbrechen (zu blockieren) und Nullpunkte oder Justierungen festzulegen bzw. anzufordern oder auszulösen. Sie kann ferner dazu ausgebildet sein, die Messwiderstandsspannung (U_{R}) und/oder die Hilfsmessspannung (U_{H}) oder aus diesen abgeleitete Werte oder Signale zu verarbeiten, abzuspeichern oder auszugeben oder das Überschreiten vorgebbarer Grenzwerte nach Art, Anzahl, Höhe, Dauer, Zeitpunkt etc. zu erfassen, auszuwerten (z.B. zur Abschätzung einer Restlebensdauer für einzelne Komponenten der Waage, wie z.B. die Überlastsicherung, oder für die Gesamtwaage) und in Abhängigkeit davon Steuer- oder Alarmsignale an die Waagensteuerung, eine übergeordnete Anlagensteuerung oder einen Bediener auszugeben.

Parameter zum Betrieb der Waage, insbesondere zur Definition von Grenzwerten zur Bestimmung von Überlastfällen, können über geeignete Schnittstellen in die Steuereinheit oder eine zugehörige Speichereinheit manuell oder in digitalem Format übergeben werden.

Um die Funktion und die Lage der Auslöseschwelle bzw. des Grenzwertes einer mechanischen Überlastsicherung zu überprüfen, können in einem Testlauf Kräfte oder Prüflasten (bekannte, ggf. rückführbare Normalgewichtstücke) auf die Waagenplattform (Lasteinleitung) aufgebracht werden, um bestimmte Werte der Hilfsmessspannung dem Auslösen der Überlastsicherung zuordnen zu können. Ein nur qualitativer Hinweis auf eine Überlastung ergibt sich dagegen bereits daraus, dass die Messwiderstandsspannung (U_{R}) außerhalb des Messbereichs ihres A/D-Wandlers liegt.

Das erfindungsgemäße Verfahren zur Detektion eines Überlastfalles an einer erfindungsgemäßen Waage umfasst das Erfassen und Auswerten der Hilfsmessspannung. Dadurch wird es erfindungsgemäß möglich, das Verhalten der Waage innerhalb des vorgesehenen Lastbereichs der Endstufe (maximale Ausgangsspannung, äquivalent dazu der maximale Ausgangsstrom) und oberhalb des für die Messwiderstandsspannung (U_{R}) vorgesehenen Messbereichs zu analysieren.

Vorzugsweise umfasst das Verfahren auch die Ausgabe eines Überlastsignals, falls die Hilfsmessspannung einen vorgebbaren Grenzwert übersteigt oder einen zeitlichen Verlauf aufweist, der einem Überlastfall entspricht. Letzteres wäre bspw. dann der Fall, wenn die Hilfsmessspannung zunächst monoton ansteigt bis zu einem Maximalwert, der innerhalb eines vorgebbaren Zeitraums konstant bleibt. Dies wäre ein Indiz dafür, dass eine mechanische Überlastsicherung ausgelöst wurde, welche die Endstufe von der Notwendigkeit der Bereitstellung eines weiterhin zunehmenden Spulenstroms befreit.

Zweckmäßigerweise umfasst das Verfahren auch die Ausgabe und/oder Anzeige und/oder Speicherung der Hilfsmessspannung oder eines ihr entsprechenden Wertes (die Begriffe "Wert" oder "Signal" in dieser Anmeldung sind insoweit den gemessenen oder verarbeiteten Spannungen gleichzusetzen, als Werte oder Signale aus den Spannungen abgeleitet oder diesen zugeordnet werden können. Ein bspw. digitales oder analoges Signal kann einem konkreten (Zahlen)-Wert entsprechen, der bspw. eine Spannung oder eine Last charakterisiert).

Die Ausgabe kann durch geeignete Anzeigemittel (Display, Bildschirm, Binärsignal etc.) erfolgen, wobei das Erreichen eines Schwellwertes auch z.B. optisch oder akustisch angezeigt werden könnte. Die Hilfsmessspannung bzw. die ihr entsprechenden Werte können als digitale Daten einer geeigneten übergeordneten Steuerung zur Auswertung übermittelt werden. Zur Erstellung einer Historie können die in der Waage erfassten Spannungen oder diesen entsprechende Werte, vorzugsweise mit Zeitstempel und weiteren Zusatzinformationen (z.B. Temperatur, Feuchte, Luftdruck und diverse daraus abgeleitete Daten), abgespeichert und bei Bedarf ausgegeben werden.

Je nach Überlastfall kann es erforderlich sein, die Waage temporär oder dauerhaft außer Betrieb zu nehmen, bzw. zumindest die Gewichtsausgabe zu verhindern und ggf. zusätzliche Schutzmaßnahmen zu aktivieren. Alternativ kann es erforderlich werden, einen neuen Nullpunkt für die Waage festzulegen oder die Waage neu zu justieren. Diese Erfordernisse können im Rahmen des erfindungsgemäßen Verfahrens angezeigt, angefordert und/oder automatisch gestartet bzw. durchgeführt werden, um die Waage unter Berücksichtigung von Überlastfällen optimal betreiben zu können.

Die erfindungsgemäße Waage und das zugehörige Verfahren lassen sich vorteilhaft zur Qualitätssicherung in der Fertigung und/oder zur Selbstdiagnose im Feld verwenden, um bspw. einen Vergleich mit einem Auslieferzustand oder historischen Daten vornehmen zu können.

Nachfolgend soll die Schaltung einer erfindungsgemäßen Waage anhand dreier Figuren näher beschrieben werden. Dabei zeigt
- Fig. 1: eine erste Ausführungsform der erfindungsgemäßen Waage mit zwei getrennten A/D-Wandlern,
- Fig. 2: eine alternative Ausführungsform mit nur einem A/D-Wandler, und
- Fig. 3: eine weitere Ausführungsform der erfindungsgemäßen Waage mit zwei getrennten A/D-Wandlern und geänderter Hilfsmessspannung.

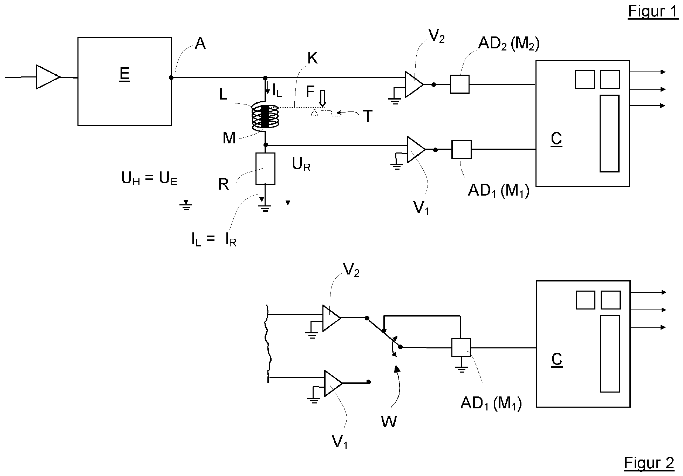

Fig. 1 zeigt in schematischer Darstellung die vereinfachte Schaltung einer erfindungsgemäßen Waage in einer ersten Ausführungsform. Eine Endstufe E ist zur Ausgabe eines Spulenstroms I_{L} ausgebildet, der durch eine Tragspule L und einen in Serie dazu geschalteten Messwiderstand R abgeleitet wird. Die Spule L wirkt mit einem Magneten M zusammen und ist am Ende eines Hebels K angeordnet, der eine in den Hebel eingebrachte Kraft F aufnimmt. Durch Regeln des Spulenstroms I_{L} wird an der Spule L eine Gegenkraft erzeugt, die den Hebel nahezu bewegungslos in seiner Sollposition hält. Bei einer größeren Kraft F ist ein höherer Spulenstrom I_{L} zur Erzeugung der Gegenkraft nötig, während eine geringere Kraft F einen entsprechend geringeren Spulenstrom I_{L} erfordert (der Spulenstrom kann unipolar oder bipolar sein).

Zur Ermittlung der Kraft F wird die vom Spulenstrom I_{L} am Messwiderstand R abfallende Spannung U_{R} abgegriffen, in einem Verstärker/Filter V₁ verstärkt und/oder aufbereitet und einem ersten A/D-Wandler AD₁ mit einem Messbereich M₁ zugeführt. Der A/D-Wandler AD₁ gibt einen der Messwiderstandsspannung U_{R} entsprechenden digitalen Wert an eine Steuereinheit C aus, solange sich die Messwiderstandsspannung U_{R} innerhalb des Messbereichs M₁ bewegt. Da die Messwiderstandsspannung U_{R} ein Maß für die Kraft F ist, lässt sich diese Kraft durch Auswertung der an die Steuereinheit C übertragenen Daten ermitteln.

Am Ausgang A der Endstufe E liegt eine Endstufenspannung U_{E} an, die in dieser Ausführungsform der erfindungsgemäß erfassten Hilfsspannung U_{H} entspricht. Die Hilfsspannung U_{H} wird wiederum von einem Verstärker/Filter V₂ verstärkt und/oder aufbereitet und einem zweiten A/D-Wandler AD₂ zugeführt, dessen Messbereich M₂ entweder größer ist als derjenige Messbereich M₁ des ersten A/D-Wandlers AD₁ oder so an diesen anschließt, dass eine außerhalb des Messbereichs M₁ des ersten A/D-Wandlers AD₁ liegende Spannung innerhalb des Messbereichs M₂ des zweiten A/D-Wandlers AD₂ liegt. Auch die vom zweiten A/D-Wandler AD₂ ausgegebenen Signale werden der Steuereinheit C zur Auswertung zugeführt.

Solange sich die Messwiderstandsspannung U_{R} innerhalb des Messbereiches M₁ bewegt, lässt sich ein der Kraft F entsprechender Gewichtswert aus den vom A/D-Wandler AD₁ bereitgestellten Signalen in der Steuereinheit C ermitteln. Nimmt die Kraft F hingegen soweit zu, dass die Messwiderstandsspannung U_{R} außerhalb des Messbereichs M₁ liegt, so kann die Kraft F mit dem A/D-Wandler AD₁ nicht mehr quantifiziert werden. Die zusätzlich zur Messwiderstandsspannung U_{R} erfasste Hilfsspannung U_{H}, die mit zunehmender Kraft F ebenfalls ansteigt, kann über den zweiten A/D-Wandler AD₂ jedoch erfasst und quantifiziert werden, solange die Hilfsspannung U_{H} innerhalb des Messbereichs M₂ des zweiten A/D-Wandlers AD₂ liegt. Mit zunehmender Kraft F wird die Hilfsmessspannung U_{H} dann so lange weiter ansteigen, bis
a) die maximale Ausgangsspannung (Aussteuerung) der Endstufe E erreicht ist, so dass diese keinen ausreichenden Spulenstrom I_{L} mehr bereitstellen kann, um in der Spule L eine ausreichende Gegenkraft zu erzeugen und den Hebel K in der Soll-Lage beizubehalten, oder
b) eine mechanische Überlastsicherung T ausgelöst wird, so dass sich der Spulenstrom I_{L} auf einen konstanten Wert einstellt.

In beiden Fällen lässt sich die Überlastung der Waage bereits dadurch feststellen, dass die Messwiderstandsspannung U_{R} den Messbereich des A/D-Wandlers AD₁ verlässt bzw. eine kurz davor befindliche Schwelle überschreitet, bzw. der A/D-Wandler ein entsprechendes Signal ausgibt. Im vorgenannten Fall a) lässt sich die die Überlastsicherung auslösende Kraft nur qualitativ ermitteln, da die Endstufe E ihre Traglast erreicht hat und die Hilfsspannung U_{H} nicht mehr definiert mit der Kraft F zusammenhängt oder den Messbereich M₂ überschreitet. Im Fall b) jedoch lässt sich aus dem zeitlichen Verlauf der Hilfsmessspannung U_{H} und dem sich einstellenden maximalen Wert dieser Spannung die Tatsache des Auslösens der Überlastsicherung T feststellen und die Auslösekraft quantitativ ermitteln, da die Hilfsmessspannung U_{H} noch innerhalb des Messbereiches M₂ liegt.

Fig. 2 zeigt eine gegenüber Fig. 1 abgewandelte erfindungsgemäße Lösung, bei der der erste A/D-Wandler AD₁ wahlweise zur Erfassung der Messwiderstandsspannung U_{R} oder der Hilfsspannung U_{H} verwendet wird. Überschreitet die dem A/D-Wandler AD₁ zugeführte Messwiderstandsspannung U_{R} den Messbereich M₁ bzw. eine definierbare Schwelle kurz davor, so wird der A/D-Wandler AD₁ umgeschaltet (oder er schaltet selbst), um statt der Messwiderstandsspannung U_{R} die Hilfsspannung U_{H} zu erfassen.

Mit der Umschaltung der an dem Eingang des A/D-Wandlers AD₁ anliegenden Signalquelle kann auch der Messbereich des Wandlers (bevorzugt intern durch den Wandler selbst) umgeschaltet werden. Zum Beispiel kann die Empfindlichkeit des Wandlers halbiert und so der Messbereich verdoppelt werden. Alternativ könnte auch die Verstärkung V₂ der Hilfsmessspannung ausreichend verringert werden, so dass auch die höhere Hilfsmessspannung innerhalb des Messbereichs M₁ liegt.

Der die Umschaltung zwischen den beiden Spannungen bewirkende Schalter W kann außerhalb oder auch innerhalb einer A/D-Wandler-Platine angeordnet sein, so dass dessen Ansteuerung unmittelbar über die Steuerung des A/D-Wandlers oder bspw. auch durch die Steuereinheit C erfolgen kann.

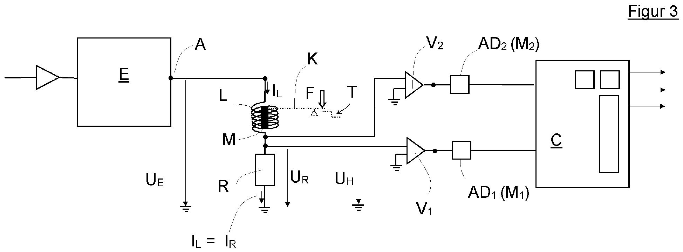

In Fig. 3 ist eine gegenüber Fig. 1 abgewandelte Ausführungsform der Erfindung dargestellt. Anders als in Fig. 1 wird die Hilfsmessspannung hier nicht zwischen der Endstufe E und der Spule L, sondern zwischen Spule L und dem Messwiderstand R abgegriffen (je nach Angriffspunkt und Leitungswiderstand kann sich auch in diesem Fall die Hilfsmessspannung U_{H} von der Messwiderstandsspannung U_{R} unterscheiden). Der A/D-Wandler AD₂ kann, wie bereits zu Fig.1 beschrieben, die Hilfsmessspannung wieder in geeignet verstärkter Größe und/oder in einem geeigneten Messbereich M₂ erfassen und zur Auswertung an die Steuereinheit übergeben.

## Patentansprüche

1. Waage, die nach dem Prinzip der elektromagnetischen Kraftkompensation arbeitet und dazu eine Tragspule (L) aufweist, wobei die Tragspule (L) relativ zu einem Magneten (M) beweglich ist und ihr von einer Endstufe (E) ein Spulenstrom (I_{L}) zuführbar ist, wobei
a) die Tragspule (L) in Reihe geschaltet ist mit einem Messwiderstand (R), und
b) die am Messwiderstand (R) abfallende Messwiderstandsspannung (U_{R}) zur Ermittlung eines Gewichtsmesswertes herangezogen wird,
**dadurch gekennzeichnet,**
c) **dass** die Waage dazu ausgelegt ist, zusätzlich zur Erfassung und Auswertung der Messwiderstandsspannung (U_{R}) eine Hilfsmessspannung (U_{H}) in Bezug auf die elektrische Masse zu erfassen und separat auszuwerten, um daraus einen Unterlastfall und/oder Überlastfall zu detektieren, wobei die Hilfsmessspannung (U_{H}) abgegriffen wird
d₁) zwischen dem Ausgang (A) der Endstufe (E) und der Spule (L) oder
d₂) zwischen der Spule (L) und dem Messwiderstand (R).

2. Waage nach Anspruch 1, **dadurch gekennzeichnet, dass** die Messwiderstandsspannung (U_{R}) einem ersten A/D-Wandler (AD₁) zuführbar ist, und die Hilfsmessspannung (U_{H})
a) entweder dem ersten A/D-Wandler (AD₁) zuführbar ist durch Umschaltung des Eingangs des ersten A/D-Wandlers (AD₁) zwischen der Messwiderstandsspannung (U_{R}) und der Hilfsmessspannung (U_{H}) oder
b) einem zusätzlich zum ersten A/D-Wandler (AD₁) vorgesehenen zweiten A/D-Wandler (AD₂) zuführbar ist.

3. Waage nach Anspruch 2, Variante a), wobei
i) die dem ersten A/D-Wandler (AD₁) zugeführte Hilfsmessspannung (U_{H}) eine geringere Verstärkung (V₂) erfährt als eine Verstärkung (V₁) der Messwiderstandsspannung (U_{R}) und/oder
ii) der Messbereich (M₁) des ersten A/D-Wandlers (AD₁) für die Messung der Hilfsmessspannung (U_{H}) anders, vorzugsweise größer, gewählt ist als für die Messung der Messwiderstandsspannung (U_{R}) vor der Umschaltung.

4. Waage nach Anspruch 2, Variante b), wobei
i) die dem zweiten A/D-Wandler (AD₂) zugeführte Hilfsmessspannung (U_{H}) eine geringere Verstärkung (V₂) erfährt als eine Verstärkung (V₁) der Messwiderstandsspannung (U_{R}), und/oder
ii) der Messbereich (M₂) des zweiten A/D-Wandler (AD₂) für die Messung der Hilfsmessspannung (U_{H}) anders, vorzugsweise größer, gewählt ist als der Messbereich (M₁) des ersten A/D-Wandlers (AD₁) für die Messung der Messwiderstandsspannung (U_{R}).

5. Waage nach einem der vorigen Ansprüche, **dadurch gekennzeichnet, dass** eine Steuereinheit (C) vorgesehen ist zur Ausgabe eines Überlastsignals, wenn die Hilfsmessspannung (U_{H}) einen vorgebbaren Grenzwert überschreitet.

6. Waage nach einem der vorigen Ansprüche, **dadurch gekennzeichnet, dass** eine mechanische Überlastsicherung (T) vorgesehen ist, wobei die Waage dazu ausgelegt ist,
a) ein der Auslösekraft der Überlastsicherung entsprechendes Signal oder einen daraus abgeleiteten Wert durch Auswertung der Hilfsmessspannung (U_{H}) zu erzeugen, und/oder
b) das Auslösen der Überlastsicherung durch Vergleich der Hilfsmessspannung (U_{H}) mit einem oder mehreren vorgebbaren Schwellwerten und/oder durch Analyse des zeitlichen Verlaufs der Hilfsmessspannung (U_{H}) zu detektieren.

7. Waage nach einem der vorigen Ansprüche, **dadurch gekennzeichnet,**
a) **dass** erfasste Spannungen (U_{H}, U_{E}, U_{R}) oder daraus erzeugte Signale in einem Speicher abspeicherbar und abrufbar sind, und/oder
b) **dass** der Zeitpunkt und/oder die Anzahl, Art, Höhe und Dauer der Überschreitungen vorgebbarer Spannungs-Grenzwerte oder die Anzahl erzeugter Signale oder erfasster Messwerte durch eine Steuereinheit (C) erfassbar und/oder auswertbar und/oder ausgebbar ist.

8. Verfahren zur Detektion eines Unterlastfalles und/oder Überlastfalles an einer Waage nach einem der vorigen Ansprüche, umfassend folgenden Verfahrensschritt:
a) Erfassen und Auswerten der Hilfsmessspannung (U_{H}) und/oder des Zeitpunktes, der Anzahl, der Art, der Höhe und/oder der Dauer der Überschreitungen vorgebbarer Spannungs-Grenzwerte.

9. Verfahren nach dem vorhergehenden Anspruch, ferner umfassend
b) Ausgabe eines Überlastsignals, falls die Hilfsmessspannung (U_{H}) einen oder mehrere vorgebbare Grenzwerte übersteigt.

10. Verfahren nach einem der beiden vorhergehenden Ansprüche, ferner umfassend die Ansteuerung der Waage
c) zur Ausgabe und/oder Anzeige und/oder Speicherung der Hilfsmessspannung und/oder eines der Hilfsmessspannung (U_{H}) entsprechenden Wertes und/oder des Zeitpunktes, der Anzahl, der Art, der Höhe und/oder der Dauer der Überschreitungen des mindestens einen Grenzwertes und/oder
d) zur Unterbrechung des regulären Wiegebetriebes und/oder der Verhinderung der Ausgabe eines Gewichtswertes für eine jeweils vorgebbare Dauer und/oder
e) zum Nullstellen und/oder Justieren der Waage.

11. Verfahren zur Überprüfung einer Überlastsicherung in einer Waage nach einem der Ansprüche 1 bis 8, umfassend folgende Schritte
a) Erfassen und quantitatives Auswerten der Hilfsmessspannung (U_{H}), um einen der Auslösekraft der Überlastsicherung entsprechenden Wert zu ermitteln, zu bewerten und bedarfsweise die Überlastsicherung anzupassen,
b) Erfassen und qualitatives Auswerten der Hilfsmessspannung (U_{H}) unter Vergleich mit einem oder mehreren vorgebbaren Grenzwerten, um das Ereignis der Auslösung der Überlastsicherung zu ermitteln.

## Claims

1. Scale which operates according to the principle of electromagnetic force compensation and has a carrying coil (L), wherein the carrying coil (L) is movable relative to a magnet (M), and a coil current (I_{L}) can be supplied to the carrying coil from an output stage (E), wherein
a) the carrying coil (L) is connected in series with a measuring resistor (R), and
b) the measuring resistor voltage (U_{R}) dropping across the measuring resistor (R) is used to determine a weight measured value,
**characterized in that**
c) the scale is designed to record and separately evaluate an auxiliary measurement voltage (U_{H}) with respect to the electrical ground, in addition to recording and evaluating the measuring resistor voltage (U_{R}), in order to detect an underload and/or overload, wherein the auxiliary measurement voltage (U_{H}) is tapped
d₁) between the output (A) of the output stage (E) and the coil (L), or
d₂) between the coil (L) and the measuring resistor (R).

2. Scale according to claim 1, **characterized in that** the measuring resistor voltage (U_{R}) can be supplied to a first A/D converter (AD₁), and the auxiliary measurement voltage (U_{H})
a) can either be supplied to the first A/D converter (AD₁) by switching the input of the first A/D converter (AD₁) between the measuring resistor voltage (U_{R}) and the auxiliary measurement voltage (U_{H}), or
b) can be supplied to a second A/D converter (AD₂) provided in addition to the first A/D converter (AD₁).

3. Scale according to claim 2, variant a), wherein
i) the auxiliary measurement voltage (U_{H}) supplied to the first A/D converter (AD₁) is subject to a lower amplification (V₂) than an amplification (V₁) of the measuring resistor voltage (U_{R}), and/or
ii) the measuring range (M₁) of the first A/D converter (AD₁) for the measurement of the auxiliary measurement voltage (U_{H}) is selected to be different, preferably larger, than for the measurement of the measuring resistor voltage (U_{R}) before switching.

4. Scale according to claim 2, variant b), wherein
i) the auxiliary measurement voltage (U_{H}) supplied to the second A/D converter (AD₂) is subject to a lower amplification (V₂) than an amplification (V₁) of the measuring resistor voltage (U_{R}), and/or
ii) the measuring range (M₂) of the second A/D converter (AD₂) for the measurement of the auxiliary measurement voltage (U_{H}) is selected to be different, preferably larger, than the measuring range (M₁) of the first A/D converter (AD₁) for the measurement of the measuring resistor voltage (U_{R}).

5. Scale according to any of the preceding claims, **characterized in that** a control unit (C) is provided for outputting an overload signal if the auxiliary measurement voltage (U_{H}) exceeds a specifiable limit value.

6. Scale according to any of the preceding claims, **characterized in that** a mechanical overload protection means (T) is provided, wherein the scale is designed
a) to generate a signal corresponding to a triggering force of the overload protection means or a value derived therefrom by evaluating the auxiliary measurement voltage (U_{H}), and/or
b) to detect the triggering of the overload protection means by comparing the auxiliary measurement voltage (U_{H}) to one or more specifiable threshold values and/or by analyzing the temporal profile of the auxiliary measurement voltage (U_{H}).

7. Scale according to any of the preceding claims, **characterized in that**
a) recorded voltages (U_{H}, U_{E}, U_{R}) or signals generated therefrom can be stored in and retrieved from a memory, and/or
b) **in that** the point in time and/or the number, type, level and duration of instances of exceeding specifiable voltage limit values, or the number of generated signals or recorded measured values can be recorded and/or evaluated and/or output by a control unit (C).

8. Method for detecting an underload and/or overload on a scale according to any of the preceding claims, comprising the following method step:
a) recording and evaluating the auxiliary measurement voltage (U_{H}) and/or the point in time, number, type, level and/or duration of the instances of exceeding specifiable voltage limit values.

9. Method according to the preceding claim, further comprising
b) outputting an overload signal if the auxiliary measurement voltage (U_{H}) exceeds one or more specifiable limit values.

10. Method according to either of the two preceding claims, further comprising controlling the scale
c) to output and/or display and/or store the auxiliary measurement voltage and/or a value corresponding to the auxiliary measurement voltage (U_{H}) and/or the point in time, number, type, level and/or duration of the instances of exceeding the at least one limit value, and/or
d) to interrupt the regular weighing operation and/or to prevent the output of a weight value for a duration which is specifiable in each case, and/or
e) for zeroing and/or adjusting the scale.

11. Method for checking an overload protection means in a scale according to any of claims 1 to 8, comprising the following steps
a) recording and quantitatively evaluating the auxiliary measurement voltage (U_{H}) in order to determine a value corresponding to the triggering force of the overload protection means, to evaluate the value, and to adjust the overload protection means as required,
b) recording and qualitatively evaluating the auxiliary measurement voltage (U_{H}) by comparison with one or more specifiable limit values in order to determine the occurrence of the overload protection means being triggered.

## Revendications

1. Balance qui fonctionne selon le principe de la compensation électromagnétique des forces et qui présente à cet effet une bobine d'alimentation (L), dans laquelle la bobine d'alimentation (L) est mobile par rapport à un aimant (M) et un courant de bobine (I_{L}) peut lui être appliqué par un étage final (E), dans laquelle
a) la bobine d'alimentation (L) est connectée en série avec une résistance de mesure (R), et
b) la tension de résistance de mesure (U_{R}) chutant aux bornes de la résistance de mesure (R) est utilisée pour déterminer une valeur de mesure de poids,
**caractérisée en ce que**
c) la balance est conçue pour saisir, en plus de la saisie et de l'évaluation de la tension de résistance de mesure (U_{R}), une tension de mesure auxiliaire (U_{H}) par rapport à la masse électrique, et pour l'évaluer séparément afin de détecter ainsi un cas de sous-charge et/ou un cas de surcharge, dans laquelle la tension de mesure auxiliaire (U_{H}) est prélevée
d₁) entre la sortie (A) de l'étage final (E) et la bobine (L), ou
d₂) entre la bobine (L) et la résistance de mesure (R).

2. Balance selon la revendication 1, **caractérisée en ce que** la tension de résistance de mesure (U_{R}) peut être appliquée à un premier convertisseur A/N (AD₁), et la tension de mesure auxiliaire (U_{H}) est appliquée
a) soit au premier convertisseur A/N (AD₁) par commutation de l'entrée du premier convertisseur A/N (AD₁) entre la tension de résistance de mesure (U_{R}) et la tension de mesure auxiliaire (U_{H}), soit
b) à un second convertisseur A/N (AD₂) prévu en plus du premier convertisseur A/N (AD₁).

3. Balance selon la revendication 2, variante a), dans laquelle
i) la tension de mesure auxiliaire (U_{H}) appliquée au premier convertisseur A/N (AD₁) subit une amplification (V₂) inférieure à une amplification (V₁) de la tension de résistance de mesure (U_{R}) et/ou
ii) la plage de mesure (M₁) du premier convertisseur A/N (AD₁) pour la mesure de la tension de mesure auxiliaire (U_{H}) est choisie différente, de préférence plus grande, que pour la mesure de la tension de résistance de mesure (U_{R}) avant la commutation.

4. Balance selon la revendication 2, variante b), dans laquelle
i) la tension de mesure auxiliaire (U_{H}) appliquée au second convertisseur A/N (AD₂) subit une amplification (V₂) inférieure à une amplification (V₁) de la tension de résistance de mesure (U_{R}) et/ou
ii) la plage de mesure (M₂) du second convertisseur A/N (AD₂) pour la mesure de la tension de mesure auxiliaire (U_{H}) est choisie différente, de préférence plus grande, que la plage de mesure (M₁) du premier convertisseur A/N (AD₁) pour la mesure de la tension de résistance de mesure (U_{R}).

5. Balance selon l'une des revendications précédentes,
**caractérisée en ce qu'**une unité de commande (C) est prévue pour émettre un signal de surcharge lorsque la tension de mesure auxiliaire (U_{H}) dépasse une valeur limite pouvant être prédéfinie.

6. Balance selon l'une des revendications précédentes,
**caractérisée en ce qu'**une protection mécanique contre les surcharges (T) est prévue, dans laquelle la balance est conçue pour
a) générer un signal correspondant à la force de déclenchement de la protection contre les surcharges ou une valeur qui en est dérivée, en évaluant la tension de mesure auxiliaire (U_{H}), et/ou
b) détecter le déclenchement de la protection contre les surcharges en comparant la tension de mesure auxiliaire (U_{H}) avec une ou plusieurs valeurs seuils pouvant être prédéfinies et/ou en analysant l'évolution dans le temps de la tension de mesure auxiliaire (U_{H}).

7. Balance selon l'une des revendications précédentes,
**caractérisée en ce que**
a) les tensions saisies (U_{H}, U_{E}, U_{R}) ou les signaux générés à partir de celles-ci peuvent être stockés dans une mémoire et récupérés de celle-ci, et/ou
b) **que** le moment et/ou le nombre, le type, l'amplitude et la durée des dépassements de valeurs limites de tension pouvant être prédéfinies ou le nombre de signaux générés ou de valeurs de mesure saisies peuvent être saisis et/ou évalués et/ou émis par une unité de commande (C).

8. Procédé pour la détection d'un cas de sous-charge et/ou d'un cas de surcharge sur une balance selon l'une des revendications précédentes, comprenant l'étape de procédé suivante :
a) saisie et évaluation de la tension de mesure auxiliaire (U_{H}) et/ou du moment, du nombre, du type, de l'amplitude et/ou de la durée des dépassements de valeurs limites de tension pouvant être prédéfinies.

9. Procédé selon la revendication précédente, comprenant en outre
b) l'émission d'un signal de surcharge si la tension de mesure auxiliaire (U_{H}) dépasse une ou plusieurs valeurs limites pouvant être prédéfinies.

10. Procédé selon l'une des deux revendications précédentes, comprenant en outre la commande de la balance
c) pour l'émission et/ou l'affichage et/ou le stockage de la tension de mesure auxiliaire et/ou d'une valeur correspondant à la tension de mesure auxiliaire (U_{H}) et/ou du moment, du nombre, du type, de l'amplitude et/ou de la durée des dépassements de l'au moins une valeur limite et/ou
d) pour l'interruption du fonctionnement normal de la pesée et/ou de l'empêchement de l'émission d'une valeur de poids pendant une durée pouvant respectivement être prédéfinie et/ou
e) pour la remise à zéro et/ou le réglage de la balance.

11. Procédé pour l'inspection d'une protection contre les surcharges dans une balance selon l'une des revendications 1 à 8, comprenant les étapes suivantes
a) saisie et évaluation quantitative de la tension de mesure auxiliaire (U_{H}), afin de déterminer une valeur correspondant à la force de déclenchement de la protection contre les surcharges, de l'évaluer et d'adapter la protection contre les surcharges si nécessaire,
b) saisie et évaluation qualitative de la tension de mesure auxiliaire (U_{H}) en la comparant à une ou plusieurs valeurs limites pouvant être prédéfinies, afin de déterminer l'événement du déclenchement de la protection contre les surcharges.
